# EUROPEAN PATENT SPECIFICATION

(11) **EP 3 698 039 B1**
(45) Date of publication and mention of the grant of the patent: **04.08.2021**
(21) Application number: 18803768.3
(22) Date of filing: 19.10.2018
(51) Int. Cl.: F03B 13/20, F03B 13/18

(54) **BUOY AND METHOD FOR THE GENERATION OF ELECTRICAL ENERGY**
BOJE UND VERFAHREN ZUR ERZEUGUNG VON ELEKTRISCHER ENERGIE
BOUÉE ET PROCÉDÉ DE PRODUCTION D'ÉNERGIE ÉLECTRIQUE

(30) Priority: 19.10.2017 IT 201700118632
(43) Date of publication of application: 26.08.2020
(73) Proprietor: Torpedine S.r.l., 41121 Modena (IT)
(72) Inventor: PEDERINI, Enrico Maria, 42020 Quattro Castella (RE) (IT)
(74) Representative: Cataldi, Giulia
(86) International application number: PCT/IB2018/058132
(87) International publication number: WO 2019/077563

(56) References cited:
- DE-A1-102009 012 168
- DE-A1-102012 223 153
- FR-A1- 2 409 396
- FR-A1- 2 540 567
- FR-A1- 2 943 742
- US-A- 3 231 749
- US-A1- 2014 353 973
- US-B1- 9 617 972

## Description

### CROSS-REFERENCE TO RELATED APPLICATIONS

This patent application claims priority from Italian patent application No. 102017000118632 filed on 19/10/2017.

### TECHNICAL FIELD

The present patent application relates to a buoy and a method for the generation of electrical energy.

In particular, the present patent application relates to a buoy comprising integrated systems for the generation and storage of electrical energy (see for example FR 2 540 567 A1).

### BACKGROUND ART

Buoys of the known type have a plurality of different shapes and sizes and are frequently used in the sea for various types of signalling, and in some cases include luminous or acoustic signalling devices. In addition, buoys are also widely used on board vessels, for example, mooring buoys can be used by vessels in those sea areas where anchorage is not possible.

Furthermore, it is noted that the use of electronic equipment has increased significantly and that, even on board sailing boats, there are many devices that need to be charged electrically. Just consider, for example, a cell phone or an on-board computer.

### DISCLOSURE OF INVENTION

The object of the present invention is to provide a buoy and a method capable of converting at least part of the wave motion energy, so as to generate and possibly accumulate electrical energy.

The object of the present invention is to provide a buoy and a method that is capable of storing electrical energy in any weather condition, for example in the case of calm sea and/or in the absence of sun.

The object of the present invention is to provide a buoy which can be used as a system for supplying an electrical appliance inside or outside the buoy itself.

According to the present invention, there is provided a buoy as recited in the appended claims.

According to the present invention, there is provided a method as recited in the appended claims.

### BRIEF DESCRIPTION OF THE DRAWINGS

The invention will now be described with reference to the accompanying drawings, which illustrate non-limiting embodiments thereof, in which:
- Figure 1 is a schematic view of a buoy according to the present invention;
- Figure 2 shows a detail of Figure 1;
- Figure 3 is a section along the line III-III in Figure 2;
- Figure 4 is a section along the line IV-IV in Figure 2;
- Figure 5 shows a further detail of Figure 1; and
- Figure 6 shows a variant of the detail of Figure 5.

### BEST MODE FOR CARRYING OUT THE INVENTION

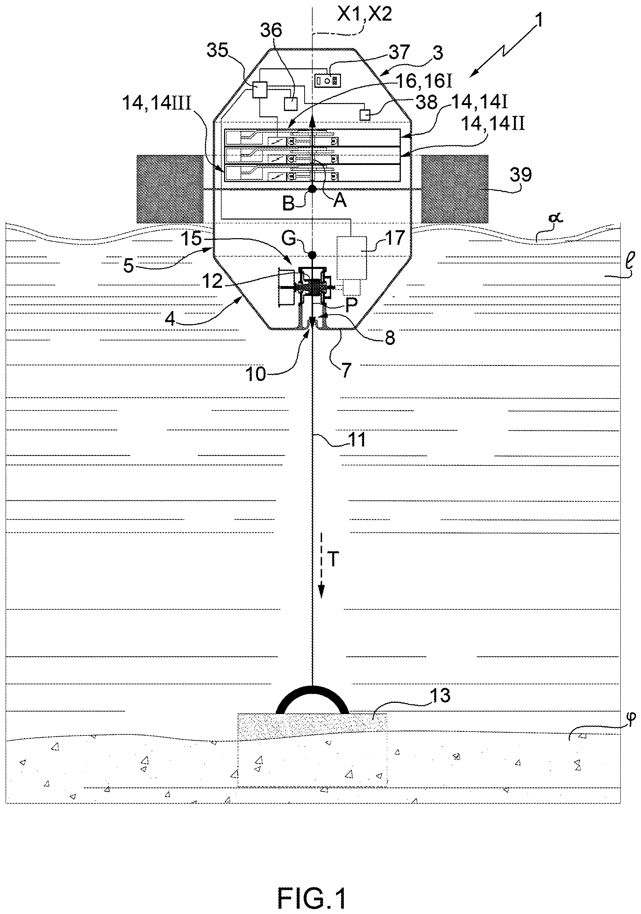

Number 1 in Figure 1 indicates, as a whole, a buoy comprising an internally hollow body 2. The buoy 1 can have any shape and size. Advantageously, the body 2 of the buoy 1 has a tapered portion, intended to be immersed in a liquid 1, so as to favour, in use, the arrangement of the buoy 1 along a predetermined orientation.

According to the illustrated example, the buoy 1 has a body axially symmetrical with respect to the longitudinal axis X1 and has two frustoconical longitudinal end portions, hereinafter identified as 3 at the top and 4 at the bottom, and an intermediate cylindrical portion 5 along the longitudinal axis X1 interposed between the end portions 3 and 4. The end portions 3 and 4 and the intermediate portion 5 delimit an internal cavity 6.

Hereinafter it is noted that the terms top, bottom, above, below, or the like will be used with reference to the arrangement of the buoy 1 in normal use conditions, as shown for example in Figure 1.

As shown in Figure 1, the buoy 1 has a base wall 7 inferiorly delimiting the bottom end portion 4.

Advantageously, the buoy 1 has, inside the cavity 6, a chamber 8 laterally delimited by a respective portion of the base wall 7 and by a box-like structure 9 arranged inside the buoy 1 and connected to the base wall 7 in a watertight manner. The base wall 7 has an opening 10, which connects the chamber 8 with the outside. The opening 10 has a size such as to allow the passage of a cable 11, as will be explained in greater detail below.

The chamber 8 houses a reel 12, which is mounted in an axially fixed, but rotationally rotatable manner with respect to a transverse axis Y1 substantially perpendicular to the longitudinal axis X1.

The buoy 1 can be made of any material, it is important that is watertight, i.e. that the liquid 1 cannot seep inside the buoy 1. Therefore, the body 2 and the box-like structure 9 are watertight.

As shown in Figure 1, in use, the buoy 1 is anchored to a seabed ϕ by means of the cable 11 and an anchoring system 13 (in the case shown a dead-weight anchorage).

In particular, as will be explained in greater detail below, at one end the cable 11 is fixed around the reel 12 and can be wound or unwound, as needed, around said reel 12; whereas at the other end the cable 11 is fixed to the anchoring system 13.

It is noted that the expression "centre of gravity" refers to the barycentre where the weight of the buoy 1 is applied; whereas the expression "centre of flotation" means the barycentre of the volume of the immersed part of the buoy 1 to which Archimedes' thrust is applied.

Advantageously, the buoy 1 is manufactured so that the centre of gravity B and the centre of flotation G are aligned on the longitudinal axis X1 in a condition of static equilibrium of the buoy 1, in this way the weight force P and Archimedes' force (equal and opposite) are on the same vertical and therefore allow a zero resultant and a zero moment, ensuring a stable equilibrium of the buoy 1.

Therefore, if the buoy 1 is given a rotation with respect to its rest condition, once the cause of the rotation ceases, the buoy 1 returns spontaneously to the stable equilibrium position, and the action that tends to bring the buoy 1 back to the initial condition is called righting torque.

Advantageously, the buoy 1 comprises two different systems configured to be operated by two respective different natural phenomena that occur on a buoy 1 immersed in a liquid 1; such systems are hereinafter referred to as the rotational system 14 and the pulling system 15.

Advantageously, the rotational system 14 uses the righting torques described above to operate an electrical generator 16.

Advantageously, the pulling system 15 uses the pulling force T generated along the cable 11 following a change in the level of the waterline α of the liquid 1, as may occur for example in the sea in the case of a wave, to operate a further electrical generator 17.

The buoy 1 may comprise a plurality of rotational systems 14, according to the example shown in Figure 1, the buoy 1 comprises three rotational systems 14, hereinafter referred to with the Roman numerals I, II and III.

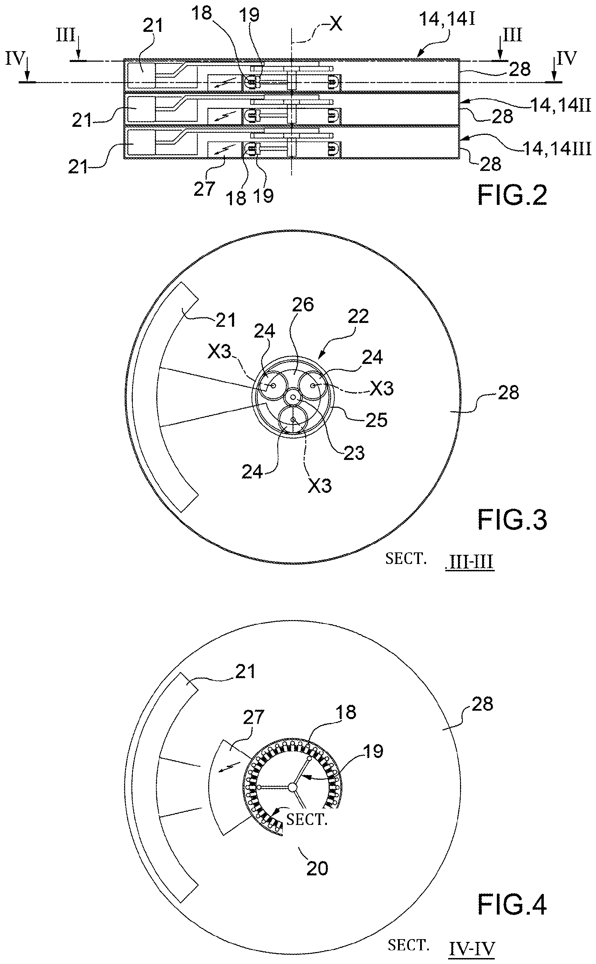

Figure 2 shows the set of three rotational systems 141, 1411 and 14III superimposed on each other, whereas Figures 3 and 4 show in detail the sections along the lines III-III and IV-IV. The rotational systems 14 are structurally identical to one another, therefore the following describes the operation of a generic rotational system 14 which applies to all.

The electrical generator 16 is a generator of a known type, for example a dynamo shown in a schematic way, in particular the electrical generator 16 comprises, in turn, a stator 18 and a rotor 19.

The stator 18 has, in a known manner, a cylindrical cavity 20 inside which the rotor 19 is rotary around a rotation axis X2. Advantageously, the rotation axis X2 of the rotor 19 and the longitudinal axis X1 of the buoy 1 coincide.

In particular, the rotational system 14 comprises a rotating body 21 and an epicyclic gearing 22, which transmits the motion to said rotor 19. As illustrated in the figures, the rotating body 21 is rotary around the rotation axis X2 of the rotor 19. In the illustrated example, the rotating body 21 is also rotatable around the longitudinal axis X1 of the buoy 1. According to the illustrated example, the rotating body 21 is a crescent rotatably mounted on a surface substantially perpendicular to the longitudinal axis X1.

In particular, the rotational system 14 comprises:
- a pinion 23, which is rotary around the rotation axis X2 of the rotor 19 and configured to rotate the rotor 19;
- a plurality of planet gears 24;
- a ring gear 25; and
- a sun gear 26.

Each planet gear 24 meshes both with the pinion 23 and with the ring gear 25. The rotating body 21 is connected to the sun gear 26. Each planet gear 24 is mounted so as to be able to rotate around its own rotation axis X3 parallel to the rotation axis X2, i.e. the longitudinal axis X1. The sun gear 26 is configured to rotate the planet gears 24 along a circular path parallel to the ring gear 25.

The sun gear 26 is rotary around the rotation axis X2. The sun gear 26 is connected to the rotating body 21 and can be rotated around the rotation axis X2 by the rotating body 21.

Advantageously, the electrical generator 16 comprises a control unit 27 connected to said stator 18.

The rotational system 14 further comprises a box-like body 27, i.e. a casing made of stainless steel and containing the rotating body 21, the electrical generator 16 and the epicyclic gearing 22.

Advantageously, the buoy 1 comprises a pulling system 15. According to the illustrated example, the buoy 1 also comprises a further electrical generator 17, which is operated by the pulling system 15.

Advantageously, the electrical generator 17 is a permanent magnet alternator, for example a coreless permanent magnet alternator of the type generally known as a wind alternator. Advantageously, the alternator 17 has a vertical axis. This type of electrical generator 17 can be operated with reduced effort. This type of electrical generator 17 has an axially symmetric and vertical structure, therefore it can be arranged inside the buoy 1, so as to be coaxial with the longitudinal axis X1 of the buoy 1 itself. This allows both the stability of the buoy 1 to be increased and its overall dimensions to be contained. This type of electrical generator 17 is particularly suitable for the production of electrical energy whilst containing weights and dimensions.

The pulling system 15 advantageously comprises a storage unit 50 configured to store the kinetic energy transferred from the wave motion to the pulling system 15 when the buoy 1 is lifted by a wave and the pulling system 15 is tensioned by the pulling force T. The storage unit 50 is configured to ensure the winding of the cable 11 around the reel 12 and the continuous operation of the electrical generator 17, especially after the passage of a wave, i.e. when the pulling system 15 is not subjected to a pulling force T.

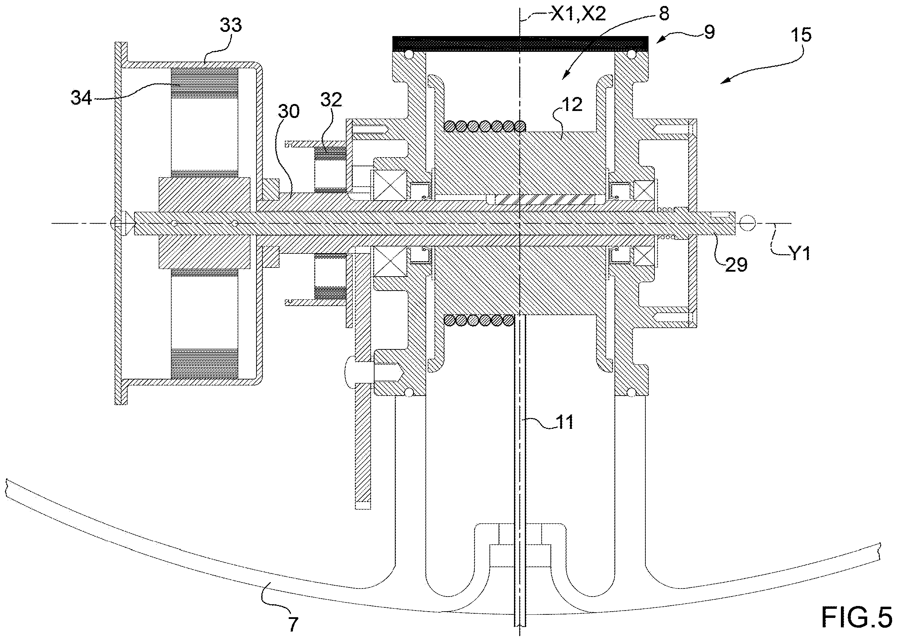

As illustrated in greater detail in Figure 5, the pulling system 15 comprises an output shaft 29 which is rotary around a rotation axis Y1. The output shaft 29 is connected to the electrical generator 17 so as to operate it. The pulling system 15 further comprises an input shaft 30, which is internally hollow and fitted around the output shaft 29.

As shown in Figure 5, the cylindrical reel 12 is internally hollow and fitted around the input shaft 30. The reel 12 is connected to the input shaft 30 so as to be able to rotate integrally therewith around the rotation axis Y1. The reel 12 is manufactured so that the cable 11 can be wound around it many times. Advantageously, the reel 12 can rotate in one direction or in the opposite direction, depending on whether the cable 11 is unwound or rewound.

The pulling system 15 also comprises a torsion spring 32, which is configured to apply a predefined pre-load torque to the input shaft 30. Advantageously, the pre-load torque applied by the torsion spring 32 to the input shaft 33 is such as to allow the cable 11 to be automatically rewound around the reel 12 when the cable 11 is not pulled, i.e. is not subjected to a pulling force. In this way, it is advantageously possible to keep the cable 11 taut.

The pulling system 15 further comprises a flywheel 33, which is connected to the input shaft 30 and rotary around the rotation axis.

The pulling system 15 also comprises a torsion spring 34 interposed between the flywheel 33 and the output shaft 29. Advantageously, the torsion spring 34 is loaded during use by the flywheel 33 so as to prolong and possibly ensure continuous rotation of the output shaft 29, even when the pulling force T exerted on the cable 11 is terminated, before the next pull (i.e. to provide continuous operation between one wave and the next). The particular shape of the input shaft and the output shaft 29 one inside the other, the flywheel 33, the torsion spring 34 substantially form the storage unit 50 of the pulling system 15.

As previously mentioned, the reel 12 is rotatably mounted in the chamber 8 so that the cable, passing through the opening 10, can unwind/wind around it.

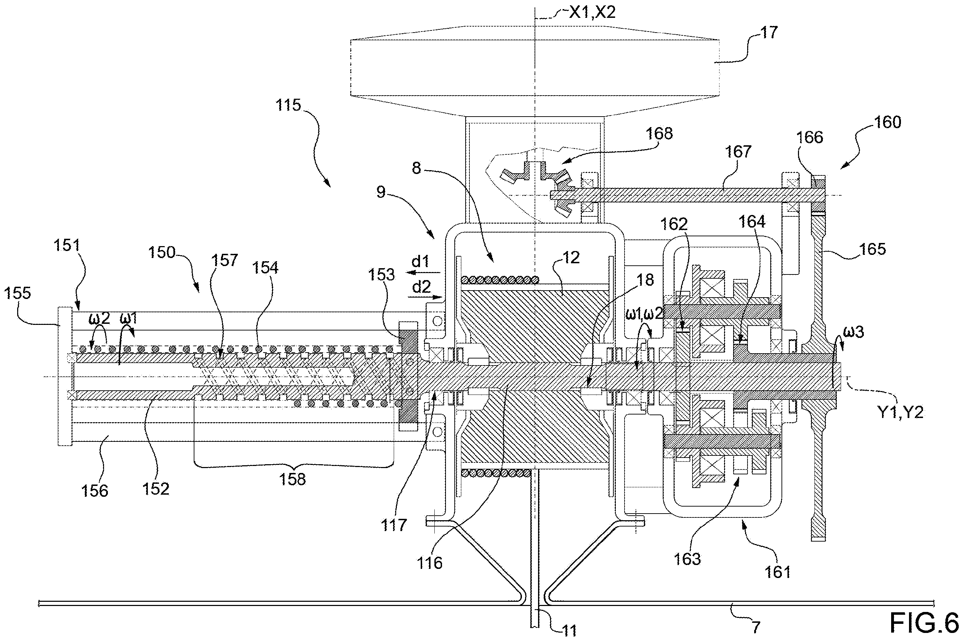

In Figure 6, the numeral 115 shows a variant of the pulling system 15 of figures 1 to 5. In Figure 6, the components in common with the pulling system 15 maintain the same numbering and are understood as comprised therein, without having to rename them for the sake of brevity.

As shown in Figure 6, the reel 12 is fitted around a driving shaft 116, which is connected at one end 117 to the storage unit 150 and at the other end 118 to the electrical generator 17. The driving shaft 116 is rotary around a rotation axis Y1 substantially perpendicular to the longitudinal axis X1 of the buoy 1.

Advantageously, the pulling system 115 comprises a transmitting unit 160 interposed between the driving shaft 116 and the electrical generator 17.

The transmission unit 160 is configured to output a rotary motion always in one direction only ω3, irrespective of the input direction of rotation ω1, ω2 of the driving shaft 116. The transmission unit 160 also has the function of multiplying the revolutions of the driving shaft 116, so as to operate the electrical generator 17 with a higher number of revolutions.

The storage unit 150 comprises a box-like body 151, a worm screw 152, an annular body 153, a spring 154. The box-like body 151 is hermetic and is fixed to the pulling system 115, so as to allow junction with the driving shaft 116. The box-like body 151 has a longitudinal axis Y2. In the illustrated case, the longitudinal axis Y2 is coaxial with the rotation axis Y1 of the driving shaft 116. The box-like body 151, in turn, comprises a back plate 155 and a side wall 156. The worm screw 152 is coaxial with and fixed to the driving shaft 116, so as to rotate around the rotation axis Y1. According to the illustrated example, the driving shaft 116 and the worm screw 152 are a single piece. According to a variant, not shown, the driving shaft 116 and the worm screw 152 are two separate components. In a known manner, the worm screw 152 has a helical groove 157 formed on its outer surface and extending over a portion 158 along the rotation axis Y2. The annular body 153 is fitted around the worm screw 152 and is coupled to the helical groove 157, so as to translate axially along the portion 158 in direction d1 when the worm screw 152 rotates in direction ω1, and in direction d2 when the worm screw rotates in direction ω2. In a known manner, the translational motion of the annular body 153 can cause rotation of the worm screw 152. The spring 154 is a helical spring and is fitted around the worm screw 152. The spring 154 is in abutment against the back plate 155 and against the annular body 153. In this way, when the driving shaft 116 rotates in direction ω1 under the effect of the driving shaft 116 (i.e. under the effect of the pulling force T exerted on the cable 11 by rotating the reel 12 and consequently the driving shaft 116), the annular body 153 translates in direction d1, thereby compressing the spring 154 against the back plate 155.

Once the pulling force T is over, i.e. once the wave has passed, the spring 154 expands, causing the annular body 153 to slide in direction d2. This causes rotation of the worm screw 152 in the opposite direction ω2. When the worm screw 152 rotates in direction ω2, the reel 12 rewinds the cable 11, and the transmission unit 160 also still operates the electrical generator 17. It should be noted that the directions of rotation shown in Figure 6 are exemplary and not limiting.

According to a variant, not shown, the spring 154 is conical so as to increase its resistance as the height of the wave increases (in other words the length travelled by the annular body 153 in direction d1). In this way, the buoy 1 is protected from any damage in the event of a wave higher than the average. In particular, the pulling system 115 is prevented from breaking.

The transmission unit 160 comprises a two-stage gearbox 161 comprising, in turn, a primary gear 162, an inverter gear 163 and a secondary gear 164. The gearbox 161 is configured to obtain a single direction of rotation ω3 at the output of the secondary gear 164, irrespective of the direction of rotation of the driving shaft 116 at the input, whether it be ω1 or ω2. The transmission unit 160 also comprises a driving ring gear 165 and a driven gear 166. The transmission ratio between the driving ring gear 165 and the driven gear 166 is such as to multiply the speed and the number of revolutions outputted from the gearbox 161. For example, the driving ring gear 165 and the driven gear 166 are configured to switch from about 12 rpm of the driving shaft to about 280 rpm of the driven gear ring 166.

The transmission unit 160 also comprises a transmission shaft 167, which transmits the rotation of the driven gear 167 to the electrical generator 17. According to the illustrated example, the transmission unit 160 further comprises a bevel geared transmission and coupling system 168 for the connection between the transmission shaft 167 and the electrical generator 17.

According to a variant, not shown, the buoy 1 also comprises a transmission unit 160 of the type described above between the embodiment of the pulling system 15 illustrated in Figure 5 and the electrical generator 17.

According to a variant, not shown, the buoy 1 may comprise a solar electrical generator applied to its outer surface. According to a further variant, not shown, the buoy 1 may comprise a further electrical generator, for example a wind generator.

Advantageously, the buoy 1 comprises a storage unit 35, i.e. a battery, to store the energy produced by the electrical generators 16 and 17.

Advantageously, the buoy 1 comprises an electrical device 36 supplied by the storage unit 35. Additionally or alternatively, the buoy 1 comprises one or more sockets 37 configured to allow external electrical devices to be coupled to the storage unit 35.

The buoy 1 may also comprise a user interface 38, which is configured to exchange data with a user, for example the level of charge of the storage unit 35.

Advantageously, the buoy 1 comprises a circular float 39 arranged around the floating body 2 so as to increase the stability of the buoy 1 itself and avoid overturning in case of very rough sea.

In use, the buoy 1 is anchored to a seabed ϕ by the cable 11 and the anchoring system 13. The length of the cable 11 is previously selected according to the average depth of the area in which the buoy 1 is anchored, so as to avoid that the cable 11 is either too short or too long.

The buoy 1 is then left in the liquid 1 so as to surface, at least partly, on the waterline α.

The natural movements of the liquid 1 in which the buoy 1 is immersed cause oscillations and/or the pulling of the cable 11 in case of wave motion.

The oscillation movements, substantially due to the return torques, are able to cause rotation of the rotating body 21 of the rotational system 14. Whereas the pulling of the cable 11 causes rotation of the reel 12 and operation of the electrical generator 17.

From the above it follows that a buoy 1 according to the present invention is capable of generating and storing electrical energy substantially in any weather condition, in fact if the sea is substantially calm or just slightly rough, the rotational system 14 is still able to operate and generate electrical energy, obviously the voltage produced is modest, but can still be sufficient to recharge low energy consumption electronic devices, such as LED lights.

Moreover, advantageously, the rotational system 14 of the type described above is compact in size and therefore can be installed individually or in series even inside small buoys. Furthermore, the fact that the rotational system 14 is compact advantageously allows a plurality of rotational systems 14 to be stacked one on top of the other.

Instead, in the case of rough sea conditions, the wave motion produces temporary displacements of the waterline, thus pulling the cable 11, the unwinding of the cable 11 causes rotation of the reel 12, and consequently operation of the electrical generator 17.

Advantageously, the buoy 1 according to the present invention can be used by a vessel in case of emergency as a charging system that can be kept on board and thrown into the sea, if necessary. Or the present buoy 1 can be used in mooring areas to provide an electric charging point without having to arrive at the quay.

## Claims

1. A buoy comprising an internally hollow floating body (2) and a first electrical generator (16; 161; 1611; 16III), in particular a dynamo, which comprises, in turn, a stator (18; 181; 1811; 18III) and a rotor (19; 191; 1911; 19III), which is rotatable mounted about a rotation axis (X2) so as to be able to rotate relative to said stator (18; 181; 1811; 18III); wherein the buoy (1) has a longitudinal axis (X1) and comprises an operating system (14; 141; 1411; 14III) to operate the rotor (19; 191; 1911; 19III) of said first electrical generator (16; 161; 1611; 16III); wherein the operating system (14; 141; 1411; 14III) comprises a rotating body (21); the buoy comprising a second electrical generator (17); wherein said second electrical generator (17) is operated by a pulling system (15; 115), which is configured to connect the buoy (1) to an anchoring area by a cable (11), which, in use, anchors the buoy (1) to a seabed (φ); wherein the rotating body (21) is rotatable around said longitudinal axis (X1) of the buoy (1); wherein the rotating body (21) is a crescent mounted on a surface substantially perpendicular to said longitudinal axis (X1); and wherein the pulling system (15; 115) comprises a storage unit (50; 150) configured to store kinetic energy; the storage unit (50; 150) is configured to ensure the winding of the cable (11) around a reel (12) and the continuous operation of the second electrical generator (17), especially after the passage of a wave, namely when the pulling system (15; 115) is not subjected to a pulling force (T).

2. A buoy according to Claim 1, wherein said operating system (14; 141; 1411; 14III) comprises an epicyclic gearing (22; 221; 2211; 22III) to transmit the motion from said rotating body (21) to said rotor (19; 191; 1911; 19III).

3. A buoy according to claim 1 or 2, wherein the operating system (14; 141; 1411; 14III) comprises:
- a pinion (23; 231; 2311; 23III), which is rotatable mounted about said rotation axis (X2) and is configured to rotate the rotor (19; 191; 1911; 19III);
- a plurality of planet gears (24; 241; 2411; 24III);
- a ring gear (25; 251; 2511; 25III); and
- a sun gear (26; 261; 2611; 26III);
wherein each planet gear (24; 241; 2411; 24III) meshes both with the pinion (23; 231; 2311; 23III) and with the ring gear (25; 251; 2511; 25III); wherein each planet gear (24; 241; 2411; 24III) is rotatable mounted about said rotation axis (X2) by said sun gear (26; 261; 2611; 26III);
wherein said sun gear (26; 261; 2611; 26III) is connected to said rotating body (21) and can be rotated around said rotation axis (X2) by said rotating body (21).

4. A buoy according to any one of the preceding claims, wherein the pulling system (15; 115) comprises:
- a first shaft (30; 116) having a rotation axis (Y1) and connected to said second electrical generator (17) and to said storage unit (50; 150); wherein said first shaft (30; 116) is configured to be rotated by said cable (11);
- a reel (12), which is fitted around and connected to said first shaft (30; 116) so as to be able to rotate integrally with said first shaft (30; 116) around said rotation axis (Y1).

5. A buoy according to Claim 4, wherein the pulling system (15) comprises: a second shaft (29) having a rotation axis (Y1) and connected to said second electrical generator (17); and a first, internally hollow shaft (30) fitted around said second shaft (29); wherein said first shaft (30) is configured to be rotated by a cable (11), which, in use, anchors the buoy (1) to a seabed (φ).

6. A buoy according to Claim 5, wherein said storage unit (50) comprises, in turn:
- first elastic means (32), which apply a predefined pre-load torque to said first shaft (30);
- a flywheel (33), which is connected to said first shaft (30) and is rotatable mounted about said rotation axis (Y);
- second elastic means (34), which are interposed between said flywheel (33) and said second shaft (29); wherein
said reel (12) is interposed between said first shaft (30) and the cable (11) and is configured so that, in use, the cable (11) can be wound around it many times.

7. A buoy according to Claim 6, wherein the first elastic means (32) are calibrated so that, in use, the cable (11) is kept stretched at a predefined tension.

8. A buoy according to Claim 3 or 4, wherein said storage unit (150) comprises: a worm screw (152) connected to said first shaft (116) and having a groove (157); an annular body (153) coupled to said groove (157) and elastic return means (154) acting on said annular body (153); wherein the sliding of said annular body (153) in the groove (157) results from the rotation of the worm screw (152) itself; wherein said elastic return means (154) are configured to cause translation of the annular body (154) when the worm screw (152) is not rotated by said first shaft (116).

9. A buoy according to any one claim from 4 to 8 and comprising a transmission unit (160) interposed between said pulling system (15; 115) and said second electrical generator (17) and configured to obtain a single output direction of rotation (ω3), irrespective of the direction of rotation (ω1, ω2) of the first shaft (30; 116).

10. A buoy according to Claim 9 and comprising a revolution multiplier system (165, 166) interposed between said transmission unit (160) and said second electrical generator (17).

11. A buoy according to any one claim from 4 to 10, wherein the buoy (1) has an inner chamber (8) having an opening (10), through which the cable (11) is arranged; wherein said reel (12) is arranged inside said chamber (8) so as to allow the cable (11) to be wound or unwound; wherein said chamber (8) is closed in a watertight manner; wherein the buoy (1) comprises sliding means (40), which are arranged close to said opening (10) and configured to slide on the cable (11) in order to prevent impurities possibly contained in the liquid (1) to access the inner chamber (8).

12. A buoy according to any one of the preceding claims and comprising: an electrical energy storage unit (35), which is connected to each electrical energy generator (16, 17; 161, 1611, 16III, 17); one or more sockets (37) to allow, in use, external electrical devices to be coupled to said storage unit (35); a user interface (38), which is configured to exchange data with a user, for example the level of charge of said storage unit (35).

13. A buoy according to any one of the preceding claims, wherein said second electrical generator (17) is a permanent magnet alternator, for example an axial alternator with permanent coreless magnets.

14. A method for the generation of electrical energy by means of a buoy (1) according to any one of the preceding claims; the method comprising
- at least partially immersing the buoy (1) in a liquid (1);
- causing rotation of the rotating body (21) by means of said liquid (1);
- causing operation of said second electrical generator (17) by varying the level of said liquid (1) and ensuring the continuous operation of the second electrical generator (17).

## Patentansprüche

1. Eine Boje aufweisend einen im Inneren hohlen Schwimmkörper (2) und einen ersten elektrischen Generator (16; 16I; 16II; 16III), insbesondere einen Dynamo, welcher wiederum einen Stator (18; 18I; 18II; 18III) und einen Rotor (19; 19I; 19II; 19III) aufweist, welcher um eine Drehachse (X2) derart drehbar befestigt ist, dass dieser relativ zu dem besagten Stator (18; 18I, 18II; 18III) bewegbar ist; wobei die Boje (1) eine Längsachse (XI) hat und ein Betriebssystem (14; 14I; 14II; 14III) aufweist, um den Rotor (19; 19I, 19II; 19III) des besagten ersten elektrischen Generators (16; 16I; 16II; 16III) zu betreiben; wobei das
Betriebssystem (14; 14I; 14II; 14III) einen Rotationskörper (21) aufweist; wobei die Boje einen zweiten elektrischen Generator (17) aufweist; wobei der zweite elektrische Generator (17) durch ein Zugsystem (15; 115) betrieben wird, welches konfiguriert ist, die Boje (1) durch ein Kabel (11) mit einem Verankerungsbereich zu verbinden, welches, im Gebrauch, die Boje (1) am Meeresgrund (φ) verankert; wobei der Rotationskörper (21) um die besagte Längsachse (X1) der Boje (1) drehbar ist;
wobei der Rotationskörper (21) ein Bogen ist, der an einer Fläche im Wesentlichen senkrecht zu der besagten Längsachse (X1) befestigt ist; und wobei das Zugsystem (15; 115) eine Speichereinheit (50; 150) aufweist, die zum Speichern von kinetischer Energie konfiguriert ist; wobei die Speichereinheit (50; 150) konfiguriert ist, um das Aufwinden des Kabels (11) um eine Rolle (12) sicherzustellen und den fortwährenden Betrieb des zweiten elektrischen Generators (17), insbesondere nach dem Passieren einer Welle, nämlich wenn auf das Zugsystem (115; 150) nicht eine Zugkraft (T) ausgeübt wird, sicherzustellen.

2. Eine Boje nach Anspruch 1, wobei das besagte Betriebssystem (14; 14I;14II; 14III) ein Planentengetriebe (22; 22I; 22II; 22III) aufweist, um die Bewegung von dem besagten Rotationskörper (21) auf den besagten Rotor (19; 19I; 19II; 19III) zu übertragen.

3. Eine Boje nach Anspruch 1 oder 2, wobei das
Betriebssystem (14; 14I; 14II; 14III) aufweist:
- ein Getrieberad (23; 23I; 23II; 23III), welches um eine Drehachse (X2) drehbar befestigt ist und konfiguriert ist, um den Rotor (19; 19I; 19II; 19III) zu drehen;
- eine Mehrzahl von Planetenrädern (24; 24I; 24II; 24III);
- einen Zahnkranz (25; 25I; 25II; 25III); und
- ein Sonnenrad (26; 26I; 26II; 26III);
wobei jedes Planetenrad (24; 24I; 24II; 24III) sowohl mit dem Getrieberad (23; 23I; 23II; 23III) als auch mit dem Zahnkranz (25; 25I; 25II; 25III) kämmt; wobei jedes Planetenrad (24; 24I; 24II; 24III) durch das besagte Sonnenrad (26; 26I; 26II; 26III) um die besagte Drehachse (X2) drehbar befestigt ist;
wobei das besagte Sonnenrad (26; 26I; 26II; 26III) mit dem Rotationskörper (21) verbunden ist und um die besagte Drehachse (X2) durch den besagten Rotationskörper (21) gedreht werden kann.

4. Eine Boje nach irgendeinem der vorhergehenden Ansprüche, wobei das Zugsystem (15; 115) aufweist:
- eine erste Welle (30; 116) mit einer Drehachse (YI) und mit dem besagten zweiten elektrischen Generator (17) und der besagten Speichereinheit (50; 150) verbunden; wobei die besagte erste Welle (30; 116) konfiguriert ist, um sich mit dem besagten Kabel (11) zu drehen;
- eine Rolle (12), welche derart auf der besagten ersten Welle (30; 116) sitzt und mit der besagten ersten Welle (30; 116) verbunden ist, dass diese zusammen mit der besagten ersten Welle (30; 116) um die besagte Drehachse (Y1) drehbar ist.

5. Eine Boje nach Anspruch 4, wobei das Zugsystem (15) aufweist: eine zweite Welle (29) mit einer Drehachse (Y1) und mit dem besagten zweiten elektrischen Generator (17) verbunden; und eine erste im Inneren hohle Welle (30), die auf der besagten zweiten Welle (29) sitzt; wobei die besagte erste Welle
(30) konfiguriert ist, durch ein Kabel (11) gedreht zu werden, welches, im Gebrauch, die Boje (1) am Meeresgrund (φ) verankert.

6. Eine Boje nach Anspruch 5, wobei die besagte Speichereinheit (50) wiederum aufweist:
- erste elastische Mittel (32), welche ein vorgegebenes vorgespanntes Drehmoment auf die besagte erste Welle (30) ausüben;
- ein Schwungrad (333), welches mit der besagten ersten Welle (30) verbunden und um die besagte Drehachse (Y) drehbar befestigt ist;
- zweite elastische Mittel (34), welche zwischen dem besagten Schwungrad (33) und der besagten zweiten Welle (29) angeordnet sind;
wobei
die Rolle (12) zwischen der besagten ersten Welle (30) und dem Kabel (11) angeordnet ist und derart konfiguriert ist, dass, im Gebrauch, das Kabel (11) mehrmals um diese gewickelt werden kann.

7. Eine Boje nach Anspruch 6, wobei die ersten elastischen Mittel (32) derart kalibriert sind, dass, im Gebrauch, das Kabel (11) mit einer vorgegebenen Spannung gespannt ist.

8. Eine Boje nach Anspruch 3 oder 4, wobei die besagte Speichereinheit (150) aufweist: eine Schneckenschraube (152), die mit der besagten ersten Welle (116) verbunden ist und eine Nut (157) hat; einen Ringkörper (153), der an die Nut (157) gekoppelt ist, und elastische Rückkehrmittel (154), die auf den besagten Ringkörper (153) einwirken; wobei das Gleiten des besagten Ringkörpers (153) in der Nut (157) aus der Drehung der Schneckenschraube (152) selbst resultiert; wobei die elastische Rückkehrmittel (154) derart konfiguriert sind, dass sie zu einer Verschiebung des Ringkörpers (154) führen, wenn die Schneckenschraube (152) durch die besagte erste Welle (116) nicht gedreht wird.

9. Eine Boje nach irgendeinem der Ansprüche 4 bis 8 und aufweisend eine Übertragungseinheit (160), die zwischen dem besagten Zugsystem (15; 115) und dem besagten zweiten elektrischen Generator (17) angeordnet ist und derart konfiguriert ist, dass eine einzige Ausgangsdrehrichtung (ω3) unabhängig von der Drehrichtung (ω1, ω2) der besagten ersten Welle (30; 116) erhalten wird.

10. Eine Boje nach Anspruch 9 und aufweisend ein Umdrehungsmultiplikatorsystem (165, 166), das zwischen der besagten Übertragungseinheit (160) und dem besagten zweiten elektrischen Generator (17) angeordnet ist.

11. Eine Boje nach irgendeinem der Ansprüche 4 bis 10, wobei die Boje eine innere Kammer (8) mit einer Öffnung (10) hat, durch die sich das Kabel (11) erstreckt; wobei die besagte Rolle (12) im Inneren der besagten Kammer (8) derart angeordnet ist, dass es dem Kabel (11) erlaubt, aufgewickelt oder abgewickelt zu werden; wobei die besagte Kammer (8) in einer wasserdichten Weise verschlossen ist; wobei die Boje Gleitmittel (40) aufweist, die nahe der besagten Öffnung (10) angeordnet sind und konfiguriert sind, auf dem Kabel (11) zu gleiten, um möglicherweise in der Flüssigkeit enthaltene Verunreinigungen daran zu hindern, in die innere Kammer (8) einzudringen.

12. Eine Boje nach irgendeinem der vorhergehenden Ansprüche und aufweisend; eine elektrische Energiespeichereinheit (35), welche mit jedem elektrischen Energiegenerator (16, 17; 16I, 16II, 16III, 17) verbunden ist; eine oder mehrere Steckanschlüsse (37), um im Gebrauch, zu ermöglichen, dass externe elektrische Geräte an die Speichereinheit (35) angeschlossen werden; eine Benutzerschnittstelle (38), die konfiguriert ist, um Daten mit einem Benutzer auszutauschen, beispielsweise den Ladezustand der Speichereinheit (35).

13. Eine Boje nach irgendeinem der vorhergehenden Ansprüche, wobei der besagte zweite elektrische Generator (17) ein Permanentmagnetgenerator, beispielsweise ein Axialgenerator mit eisenlosen Permanentmagneten, ist.

14. Ein Verfahren zur Gewinnung von elektrischer Energie mittels einer Boje (1) nach irgendeinem der vorhergehenden Ansprüche; wobei das Verfahren aufweist:
- wenigstens teilweises Eintauchen der Boje (1) in eine Flüssigkeit (1);
- Verursachen einer Drehung des Rotationskörpers (21) mittels der besagten Flüssigkeit (1);
- Verursachen des Betriebs des besagten zweiten elektrischen Generators (17) durch die Veränderung des Niveaus der Flüssigkeit (1) und Sicherstellen des fortlaufenden Betriebs des zweiten elektrischen Generators (17).

## Revendications

1. Bouée comprenant un corps flottant creux à l'intérieur (2) et un premier générateur électrique (16 ; 16I ; 16II ; 16III), en particulier une dynamo, qui comprend, à son tour, un stator (18 ; 18I ; 18II ; 18III) et un rotor (19 ; 19I ; 19II ; 19III)qui est monté de manière à pouvoir tourner autour d'un axe de rotation (X2) de sorte à être apte à tourner par rapport audit stator (18 ; 18I ; 18II ; 18III) ; dans laquelle la bouée (1) présente un axe longitudinal (X1) et comprend un système de fonctionnement (14 ; 14I ; 14II ; 14III) pour faire fonctionner le rotor (19 ; 19I ; 19II ; 19III)dudit premier générateur électrique (16 ; 16I ; 16II ; 16III) ; dans laquelle le système de fonctionnement (14 ; 14I ; 14II ; 14III) comprend un corps rotatif (21) ; la bouée comprenant un second générateur électrique (17) ; dans laquelle ledit second générateur électrique (17) est actionné par un système de traction (15 ; 115) qui est configuré pour raccorder la bouée (1) à une zone d'ancrage par un câble (11) qui ancre en utilisation la bouée (1) à un fond marin (ϕ) ; dans laquelle le corps rotatif (21) peut tourner autour dudit axe longitudinal (X1) de la bouée (1) ;
dans laquelle le corps rotatif (21) est un croissant monté sur une surface sensiblement perpendiculaire audit axe longitudinal (X1) ; et dans laquelle le système de traction (15 ; 115) comprend une unité de stockage (50 ; 150) configurée pour stocker de l'énergie cinétique ; l'unité de stockage (50 ; 150) est configurée pour assurer l'enroulement du câble (11) autour d'une bobine (12) et le fonctionnement continu du second générateur électrique (17), spécialement après le passage d'une onde, à savoir lorsque le système de traction (15 ; 115) n'est pas soumis à une force de traction (T).

2. Bouée selon la revendication 1, dans laquelle ledit système de fonctionnement (14 ; 14I ; 14II ; 14III) comprend un engrenage à satellites (22 ; 22I ; 22II ; 22III) pour transmettre le mouvement dudit corps rotatif (21) audit rotor (19 ; 19I ; 19II ; 19III).

3. Bouée selon la revendication 1 ou 2, dans laquelle ledit système de fonctionnement (14 ; 14I ; 14II ; 14III) comprend :
- un pignon (23 ; 23I ; 23II ; 23III) qui est monté de manière à pouvoir tourner autour dudit axe de rotation (X2) et est configuré pour faire tourner le rotor (19 ; 19I ; 19II ; 19III) ;
- une pluralité d'engrenages planétaires (24 ; 24I ; 24II ; 24III) ;
- un engrenage annulaire (25 ; 25I ; 25II ; 25III) ; et
- un engrenage solaire (26 ; 26I ; 26II ; 26III) ;
dans laquelle chaque engrenage planétaire (24 ; 24I ; 24II ; 24III) s'engrène à la fois avec le pignon (23 ; 23I ; 23II ; 23III) et avec l'engrenage annulaire (25 ; 25I ; 25II ; 25III) ; dans laquelle chaque engrenage planétaire (24 ; 24I ; 24II ; 24III) est monté de manière à pouvoir tourner autour dudit axe de rotation (X2) par ledit engrenage solaire (26 ; 26I ; 26II ; 26III) ;
dans laquelle ledit engrenage solaire (26 ; 26I ; 26II ; 26III) est raccordé audit corps rotatif (21) et peut être tourné autour dudit axe de rotation (X2) par ledit corps rotatif (21).

4. Bouée selon l'une quelconque des revendications précédentes, dans laquelle le système de traction (15 ; 115) comprend :
- un premier arbre (30 ; 116) présentant un axe de rotation (Y1) et raccordé audit second générateur électrique (17) et à ladite unité de stockage (50 ; 150) ; dans laquelle ledit premier arbre (30 ; 116) est configuré pour être tourné par ledit câble (11) ;
- une bobine (12) qui est ajustée autour dudit premier arbre (30 ; 116) et raccordée à celui-ci de sorte à être apte à tourner d'un seul tenant avec ledit premier arbre (30 ; 116) autour dudit axe de rotation (Y1).

5. Bouée selon la revendication 4, dans laquelle le système de traction (15) comprend : un second arbre (29) présentant un axe de rotation (Y1) et raccordé audit second générateur électrique (17) ; et un premier arbre creux à l'intérieur (30) ajusté autour dudit second arbre (29) ; dans laquelle ledit premier arbre (30) est configuré pour être tourné par un câble (11) qui ancre en utilisation la bouée (1) à un fond marin (ϕ).

6. Bouée selon la revendication 5, dans laquelle ladite unité de stockage (50) comprend, à son tour :
- des premiers moyens élastiques (32) qui appliquent un couple de rotation de précharge prédéfini audit premier arbre (30) ;
- un volant (33) qui est raccordé audit premier arbre (30) et est monté de manière à pouvoir tourner autour dudit axe de rotation (Y) ;
- des seconds moyens élastiques (34) qui sont interposés entre ledit volant (33) et ledit second arbre (29) ; dans laquelle
ladite bobine (12) est interposée entre ledit premier arbre (30) et le câble (11) et est configurée de sorte que le câble (11) puisse être enroulé en utilisation autour de celle-ci plusieurs fois.

7. Bouée selon la revendication 6, dans laquelle les premiers moyens élastiques (32) sont calibrés de sorte qu'en utilisation, le câble (11) soit maintenu étiré à une tension prédéfinie.

8. Bouée selon la revendication 3 ou 4, dans laquelle ladite unité de stockage (150) comprend : une vis sans fin (152) raccordée audit premier arbre (116) et présentant une rainure (157) ; un corps annulaire (153) couplé à ladite rainure (157) et des moyens de rappel élastiques (154) agissant sur ledit corps annulaire (153) ; dans laquelle le coulissement dudit corps annulaire (153) dans la rainure (157) résulte de la rotation de la vis sans fin (152) elle-même ; dans laquelle lesdits moyens de rappel élastiques (154) sont configurés pour provoquer la translation du corps annulaire (154) lorsque la vis sans fin (152) n'est pas tournée par ledit premier arbre (116).

9. Bouée selon l'une quelconque des revendications 4 à 8 et comprenant une unité de transmission (160) interposée entre ledit système de traction (15 ; 115) et ledit second générateur électrique (17) et configurée pour obtenir une seule direction de sortie de rotation (ω3), indépendamment de la direction de rotation (ω1, (ω2) du premier arbre (30 ; 116).

10. Bouée selon la revendication 9 et comprenant un système de multiplication de révolution (165, 166) interposé entre ladite unité de transmission (160) et ledit second générateur électrique (17).

11. Bouée selon l'une quelconque des revendications 4 à 10, dans laquelle la bouée (1) présente une chambre intérieure (8) présentant une ouverture (10), à travers laquelle le câble (11) est agencé ; dans laquelle ladite bobine (12) est agencée à l'intérieur de ladite chambre (8) de sorte à permettre au câble (11) d'être enroulé ou déroulé ; dans laquelle ladite chambre (8) est fermée de manière étanche à l'eau ; dans laquelle la bouée (1) comprend des moyens de coulissement (40) qui sont agencés près de ladite ouverture (10) et configurés pour coulisser sur le câble (11) afin d'empêcher que des impuretés éventuellement contenues dans le liquide (1) n'accèdent à la chambre intérieure (8).

12. Bouée selon l'une quelconque des revendications précédentes et comprenant : une unité de stockage d'énergie électrique (35) qui est raccordée à chaque générateur d'énergie électrique (16, 17 ; 16I, 16II, 16III, 17) ; une ou plusieurs douilles (37) pour permettre, en utilisation, à des dispositifs électriques externes d'être couplés à ladite unité de stockage (35); une interface utilisateur (38) qui est configurée pour échanger des données avec un utilisateur, par exemple le niveau de charge de ladite unité de stockage (35).

13. Bouée selon l'une quelconque des revendications précédentes, dans laquelle ledit second générateur électrique (17) est un alternateur à aimant permanent, par exemple un alternateur axial avec des aimants permanents sans noyau.

14. Procédé pour la production d'énergie électrique au moyen d'une bouée (1) selon l'une quelconque des revendications précédentes ; le procédé comprenant
- l'immersion au moins partielle de la bouée (1) dans un liquide (1) ;
- la mise en rotation du corps rotatif (21) au moyen dudit liquide (1) ;
- la mise en fonctionnement dudit second générateur électrique (17) par variation du niveau dudit liquide (1) et le fait d'assurer le fonctionnement continu du second générateur électrique (17).
